# EUROPEAN PATENT APPLICATION

(11) **EP 4 579 987 A1**
(43) Date of publication of application: **02.07.2025**
(21) Application number: 23892869.1
(22) Date of filing: 19.01.2023
(51) Int. Cl.: H02J 7/00

(54) **ENERGY STORAGE SYSTEM AND EQUIPOTENTIAL APPARATUS THEREOF, ENERGY STORAGE DEVICE, AND POWER STATION**

(30) Priority: 25.11.2022 WO PCT/CN2022/134399
(71) Applicant: Contemporary Amperex Technology (Hong Kong) Limited, Central (HK)
(72) Inventor: XU, Xiangxiang, Ningde, Fujian 352100 (CN); LU, Yanhua, Ningde, Fujian 352100 (CN); YU, Dongxu, Ningde, Fujian 352100 (CN); GUO, Zide, Ningde, Fujian 352100 (CN); CHEN, Bin, Ningde, Fujian 352100 (CN); ZHUANG, Yan, Ningde, Fujian 352100 (CN); LIANG, Liliuyuan, Ningde, Fujian 352100 (CN); LUO, Bingtuan, Ningde, Fujian 352100 (CN)
(74) Representative: Gong, Jinping
(86) International application number: PCT/CN2023/073138
(87) International publication number: WO 2024/108758

(57) **Abstract**

This application discloses an energy storage system and an equipotential apparatus thereof, an energy storage device, and a power station. Under a condition that the equipotential apparatus is disposed between a positive direct-current bus and negative direct-current bus of the energy storage system, a potential (or electric potential) of an equipotential node in the equipotential apparatus is between a positive direct-current bus voltage and negative direct-current bus voltage of the energy storage system. Therefore, a voltage between the bus in the energy storage system and a metal component connected to the equipotential node can be effectively reduced, so that the reduced voltage is between the positive direct-current bus voltage and the negative direct-current bus voltage, thereby effectively reducing the internal insulation design requirements for the energy storage system.

## Description

### CROSS-REFERENCE TO RELATED APPLICATIONS

This application claims priority to International Patent Application No. PCT/CN2022/134399, filed on November 25, 2022 and entitled "ENERGY STORAGE SYSTEM AND EQUIPOTENTIAL APPARATUS THEREOF, ENERGY STORAGE DEVICE, AND POWER STATION" which is incorporated herein by reference in its entirety.

### TECHNICAL FIELD

This application relates to the field of batteries, and specifically, to an energy storage system and an equipotential apparatus thereof, an energy storage device, and a power station.

### BACKGROUND

In the related art, a power module of an energy storage system is connected in parallel to a plurality of battery modules. To prevent floating potential discharge from damaging components in the energy storage system in a high-voltage environment, the power module may be equipotential with a negative electrode. However, the battery modules connected in parallel to the power module in the energy storage system and other electronic components are also in the high-voltage environment, but no effective protection measure is provided.

### SUMMARY

In view of the foregoing problems, this application provides an energy storage system and an equipotential apparatus thereof, an energy storage device, and a power station, so as to solve the prior-art problem of high internal insulation design requirements for an energy storage system in the related art.

According to a first aspect, an equipotential apparatus is provided and applied to an energy storage system. The equipotential apparatus includes an equipotential node, where under a condition that the equipotential apparatus is disposed between a positive direct-current bus and negative direct-current bus of the energy storage system, a potential of the equipotential node is between a positive direct-current bus voltage and negative direct-current bus voltage of the energy storage system.

Under the condition that the equipotential apparatus provided in the embodiments of this disclosure is disposed between the positive direct-current bus and negative direct-current bus of the energy storage system, the potential of the equipotential node in the equipotential apparatus is between the positive direct-current bus voltage and negative direct-current bus voltage of the energy storage system. Thus, a voltage between the bus in the energy storage system and a metal component connected to the equipotential node can be effectively reduced, so that the reduced voltage is between the positive direct-current bus voltage and the negative direct-current bus voltage, thereby effectively reducing the internal insulation design requirements for the energy storage system.

Optionally, the equipotential apparatus includes a plurality of voltage dividing elements, where the plurality of voltage dividing elements are connected in series, and the equipotential node is disposed between the plurality of voltage dividing elements. Thus, voltage division can be implemented.

Optionally, the voltage dividing elements include resistors.

Optionally, the plurality of voltage dividing elements include two resistors.

Optionally, the two resistors have equal resistance values. Compared with a condition where the two resistance values are unequal, under the condition that the two resistance values are equal, the equipotential apparatus has a better equipotential effect.

Optionally, a resistance value between the equipotential node and the positive direct-current bus is equal to a resistance value between the equipotential node and the negative direct-current bus.

Optionally, the equipotential apparatus includes a first connection terminal and a second connection terminal, where the first connection terminal is configured to be connected to the positive direct-current bus, and the second connection terminal is configured to be connected to the negative direct-current bus.

Optionally, the equipotential apparatus further includes a capacitor, where
the capacitor is connected between the equipotential node and the first connection terminal; or
the capacitor is connected between the equipotential node and the second connection terminal.

Optionally, when two capacitors are provided, one of the two capacitors is connected between the equipotential node and the first connection terminal, and the other of the two capacitors is connected between the equipotential node and the second connection terminal.

In the embodiments of this disclosure, the resistor in the equipotential apparatus may be connected in parallel to the capacitor or may not be connected in parallel to the capacitor. Compared with a condition where the resistor is not connected in parallel to the capacitor, under a condition that the resistor is connected in parallel to the capacitor, the equipotential apparatus has a better equipotential effect. In addition, compared with a condition where the capacitor is connected in parallel to a voltage dividing element located between the equipotential node and the positive direct-current bus, under a condition that the capacitor is connected in parallel to a voltage dividing element located between the equipotential node and the negative direct-current bus, the equipotential apparatus has a better equipotential effect. When two capacitors are provided, compared with a condition where the two capacitors have unequal capacitance values, under a condition that the two capacitors have equal capacitance values, the equipotential apparatus has a better equipotential effect.

Optionally, the capacitor is a Y capacitor.

Optionally, the capacitor may be a capacitor. Since the capacitor is a Y capacitor, and the capacitor is connected in parallel to the resistor, if there is a surge in the energy storage system, the capacitor is turned on, the problem of the potential floating of the equipotential node caused by the surge can be effectively prevented.

In addition, compared with the condition where the capacitor is connected in parallel to the voltage dividing element located between the equipotential node and the positive direct-current bus, under the condition that the capacitor is connected in parallel to the voltage dividing element located between the equipotential node and the negative direct-current bus, the energy storage apparatus fits an equipotential manner of a negative electrode of the power unit, and a small voltage difference is present between the energy storage apparatus and the power unit, so that the risk of insulation is lower.

Optionally, the equipotential node is configured to be connected to a metal component in the energy storage system. Thus, a voltage between the metal component and the bus can be effectively reduced, the internal insulation design requirements for the energy storage system can be further effectively reduced, and the risk of single-point insulation failure can be effectively avoided.

Optionally, the metal component includes one or more of the following: an enclosure of an electrical cabinet, an enclosure of an electrical box, an enclosure of a main control box, an enclosure of a battery, an enclosure of a control apparatus, a grounding terminal of the control apparatus, an enclosure of a relay, an enclosure of a power module, an enclosure of an electrical converter, and a water cooling plate.

Optionally, the equipotential node is connected to the metal component through a wire, a welding manner, or a bolt locking manner.

According to a second aspect, an energy storage system is provided, including:
a power unit, where the power unit is configured to convert alternating current and provide the alternating current to positive and negative direct-current buses, or to transmit electrical energy;
the equipotential apparatus according to the above aspect, where the equipotential apparatus is disposed between the positive and negative direct-current buses and includes an equipotential node; and
an energy storage apparatus, where the energy storage apparatus is connected in parallel between the positive and negative direct-current buses, and a metal component of the energy storage apparatus is connected to the equipotential node.

Optionally, the energy storage apparatus includes an electrical cabinet and at least one battery disposed in the electrical cabinet, where the battery is connected between the positive and negative direct-current buses, and the metal component includes an enclosure of the electrical cabinet. Thus, the enclosure of the electrical cabinet is equipotential with the equipotential node.

Optionally, the energy storage apparatus further includes an electrical box corresponding to each battery, where the electrical box is disposed in the electrical cabinet, and an enclosure of the electrical box is connected to the enclosure of the electrical cabinet. Thus, the enclosure of the electrical box is equipotential with the equipotential node.

Optionally, the energy storage apparatus further includes a main control box, where an enclosure of the main control box is connected to the enclosure of the electrical cabinet. Thus, the enclosure of the main control box is equipotential with the equipotential node.

Optionally, the equipotential apparatus is disposed in the main control box.

Optionally, the main control box is further internally provided with a main positive switch, a main negative switch, a precharge switch, and a precharge resistor, where the main positive switch is connected in series to the positive direct-current bus of the positive and negative direct-current buses, the precharge switch and the precharge resistor are connected in series and then connected in parallel to the main positive switch, and the main negative switch is connected in series to the negative direct-current bus of the positive and negative direct-current buses; and a terminal of the equipotential apparatus is connected between the main positive switch and a positive electrode of the battery, and another terminal of the equipotential apparatus is connected between the main negative switch and a negative electrode of the battery.

Optionally, the main control box is disposed outside the electrical cabinet, or the main control box is disposed in the electrical cabinet.

Optionally, the equipotential apparatus is disposed in the electrical cabinet, and a terminal of the equipotential apparatus is connected to a positive electrode of the battery, and another terminal of the equipotential apparatus is connected to a negative electrode of the battery.

Optionally, when a plurality of batteries are provided, the plurality of batteries are connected in series.

Optionally, when a plurality of energy storage apparatuses are provided, a plurality of equipotential apparatuses are provided, where the plurality of energy storage apparatuses are respectively connected in parallel between the positive and negative direct-current buses, and a metal component of each energy storage apparatus is connected to an equipotential node configured by a corresponding equipotential apparatus. The equipotential apparatus is disposed in each energy storage apparatus, and all metal components in each energy storage apparatus are equipotential with the equipotential node. In addition, this implementation can adapt to insulation detection functions of the plurality of energy storage apparatuses connected in parallel.

Optionally, when a plurality of energy storage apparatuses are provided, the plurality of energy storage apparatuses are respectively connected in parallel between the positive and negative direct-current buses, a metal component of any one of the plurality of energy storage apparatuses is connected to the equipotential node, and metal components of the plurality of energy storage apparatuses are connected in series. Each energy storage apparatus is equipotential with the equipotential node. This implementation design is relatively simple. In addition, in an application scenario where a plurality of electrical cabinets are arranged in a concentrated manner in one cabin (such as a container), the potential distribution in the container is relatively uniform, which can avoid the insulation problem.

Optionally, the power unit is disposed in a power box, and an enclosure of the power box is connected to the negative direct-current bus of the positive and negative direct-current buses.

Optionally, the power unit is configured by a power component into a half-bridge circuit, a full-bridge circuit, or a power conversion system.

Optionally, an input terminal of the power unit is provided with a bypass switch.

According to a third aspect, an energy storage device is provided, including the energy storage system according to the above aspect.

Optionally, a plurality of energy storage systems are provided, and the plurality of energy storage systems are cascaded.

According to a fourth aspect, a power station is provided, including the energy storage device according to the above aspect.

Additional aspects and advantages of this disclosure will be given in part in the following description, part of which will become apparent from the following description or be learned from the practice of this disclosure.

### BRIEF DESCRIPTION OF DRAWINGS

FIG. 1 is a schematic structural diagram of an equipotential apparatus according to an embodiment of this disclosure;
FIG. 2 is a schematic structural diagram of another equipotential apparatus according to an embodiment of this disclosure;
FIG. 3 is a schematic structural diagram of a still another equipotential apparatus according to an embodiment of this disclosure;
FIG. 4 is a schematic structural diagram of a yet another equipotential apparatus according to an embodiment of this disclosure;
FIG. 5 is a schematic structural diagram of an energy storage system according to an embodiment of this disclosure;
FIG. 6 is a schematic structural diagram of another energy storage system according to an embodiment of this disclosure;
FIG. 7 is a schematic structural diagram of a still another energy storage system according to an embodiment of this disclosure;
FIG. 8 is a schematic structural diagram of a yet another energy storage system according to an embodiment of this disclosure;
FIG. 9 is a schematic structural diagram of a still yet another energy storage system according to an embodiment of this disclosure;
FIG. 10 is a schematic structural diagram of a further energy storage system according to an embodiment of this disclosure;
FIG. 11 is a schematic structural diagram of a still further energy storage system according to an embodiment of this disclosure;
FIG. 12 is a schematic structural diagram of an energy storage device according to an embodiment of this disclosure;
FIG. 13 is a schematic structural diagram of another energy storage device according to an embodiment of this disclosure; and
FIG. 14 is a schematic structural diagram of a still another energy storage device according to an embodiment of this disclosure.

### DESCRIPTION OF EMBODIMENTS

The following describes the embodiments of this disclosure in detail. Examples of the embodiments are shown in the accompanying drawings. Throughout the accompanying drawings, the same or similar reference signs indicate the same or similar components or components with the same or similar functions. The embodiments described below with reference to the accompanying drawings are illustrative, are intended to explain this disclosure, and should not be construed as limitations on this disclosure.

In a conventional energy storage system, a power module is connected in series to a battery module. If a system voltage level is low, for example, the system voltage level is less than or equal to 1500 volts (V), an enclosure of the battery module is typically grounded directly, provided that a high-voltage circuit and the enclosure of the battery module meet the insulation and voltage withstand requirements at the corresponding voltage level. For a high-voltage direct-current transmission and distribution system, since the system voltage level is very high, for example, the system voltage level can reach tens of kilovolts or even hundreds of kilovolts, an enclosure of the power module in the energy storage system cannot be grounded directly, and a high-voltage support insulator is typically used to support the power module. However, to prevent floating potential discharge from damaging primary and secondary components in the energy storage system in a high-voltage environment, the enclosure of the power module still needs to be clamped to potential. Typically, the enclosure of the power module is equipotential with a negative electrode, that is, the enclosure of the power module is connected to the negative electrode.

In the related art, a novel high-voltage energy storage system includes a power module connected in parallel to a plurality of battery modules, where the power module is equipotential with a negative electrode. For the novel high-voltage energy storage system, if the battery module connected in parallel to the power module is also equipotential with the negative electrode, the following problems will exist.

First, the risk of single-point insulation failure in the battery module is high. Since the negative electrode is connected to a metal enclosure (this means insulation failure at a terminal of the battery module), when there is another insulation failure in the battery module, this means a short circuit between positive and negative electrodes of the battery module, resulting in a very high safety risk.

Second, the negative electrode being connected to the enclosure affects the insulation detection function of the battery module. The insulation detection function requires that the voltage at both ends of the battery cannot be directly sampled, and an insulation resistance value calculated at this time is 0. In addition, if the battery module includes a plurality of battery groups connected in parallel, the plurality of battery groups connected in parallel are equivalent to being equipotential, and the insulation detection functions will also interfere with each other.

Third, the voltage between an enclosure of an electrical box and an enclosure of a single battery is high, that is, the voltage of the entire energy storage system is high. When the enclosure of the electrical box is equipotential with a negative electrode of a bus, a maximum voltage difference between the enclosure of the electrical box and the enclosure of the battery is the voltage of the entire battery module, resulting in a high voltage between the enclosure of the electrical box and the enclosure of the battery.

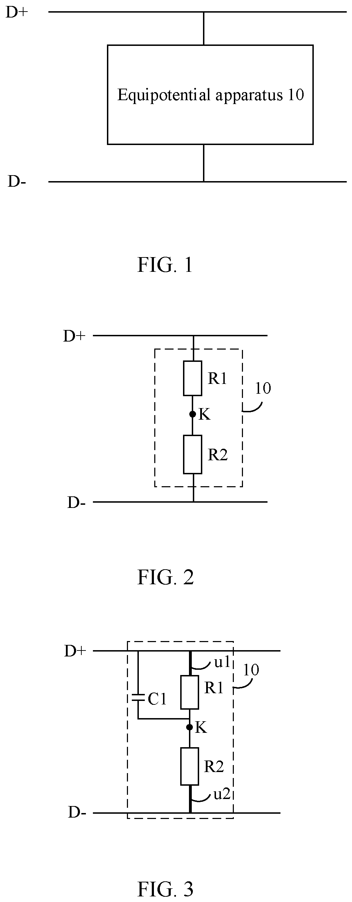

FIG. 1 is a schematic structural diagram of an equipotential apparatus according to an embodiment of this disclosure. The equipotential apparatus 10 is applicable to an energy storage system. The equipotential apparatus 10 may include an equipotential node. Under a condition that the equipotential apparatus 10 is disposed between a positive direct-current bus D+ and negative direct-current bus D- of the energy storage system, a potential of the equipotential node is between a positive direct-current bus D+ voltage and negative direct-current bus D- voltage of the energy storage system. Thus, a voltage between the bus in the energy storage system and a metal component connected to the equipotential node can be effectively reduced, so that the reduced voltage is between the positive direct-current bus D+ voltage and the negative direct-current bus D- voltage, thereby effectively reducing the internal insulation design requirements for the energy storage system.

In conclusion, this embodiment of this disclosure provides the equipotential apparatus. Under the condition that the equipotential apparatus is disposed between the positive direct-current bus and negative direct-current bus of the energy storage system, the potential of the equipotential node in the equipotential apparatus is between the positive direct-current bus voltage and negative direct-current bus voltage of the energy storage system. Thus, the voltage between the bus in the energy storage system and the metal component connected to the equipotential node can be effectively reduced, so that the reduced voltage is between the positive direct-current bus voltage and the negative direct-current bus voltage, thereby effectively reducing the internal insulation design requirements for the energy storage system.

In this embodiment of this disclosure, the equipotential apparatus 10 may include a plurality of voltage dividing elements, where the plurality of voltage dividing elements are connected in series, and the equipotential node K is disposed between the plurality of voltage dividing elements. Optionally, the equipotential node K may be a midpoint between the plurality of voltage dividing elements.

Referring to FIG. 2, each voltage dividing element may include a resistor, and the voltage dividing element may include one or more resistors. If the voltage dividing element includes a plurality of resistors, the plurality of resistors can be connected in series and/or in parallel.

Optionally, a resistance value between the equipotential node K and the positive direct-current bus D+ may be equal to a resistance value between the equipotential node K and the negative direct-current bus D-, thereby effectively reducing the internal insulation design requirements for the energy storage system. That is, a sum of resistance values of resistors located between the equipotential node K and the positive direct-current bus D+ is equal to a sum of resistance values of resistors located between the equipotential node K and the negative direct-current bus D-.

Optionally, the plurality of voltage dividing elements may include two resistors. The two resistors are connected in series, and the two resistors are further configured to be connected to the positive direct-current bus D+ and the negative direct-current bus D-. The equipotential node K may be disposed between the two resistors. For example, referring to FIG. 2, the equipotential node K may be disposed at a midpoint between the two resistors (that is, a first resistor R1 and a second resistor R2).

Optionally, the resistance values of the two resistors may be equal or unequal. It can be understood that the resistance values of the two resistors being equal may mean that the two resistance values are absolutely equal or approximately equal. The two resistance values being absolutely equal means that a difference between the two resistance values is 0, and the two resistance values being approximately equal means that an absolute value of the difference between the two resistance values is less than a first difference threshold, where the first difference threshold is greater than 0.

In this embodiment of this disclosure, compared with a condition where the two resistance values are unequal, under a condition that the two resistance values are equal, if the equipotential node K is disposed at the midpoint between the two resistors, the voltage between the metal component and the bus in the energy storage system can be reduced by half, and the equipotential apparatus 10 has a better equipotential effect.

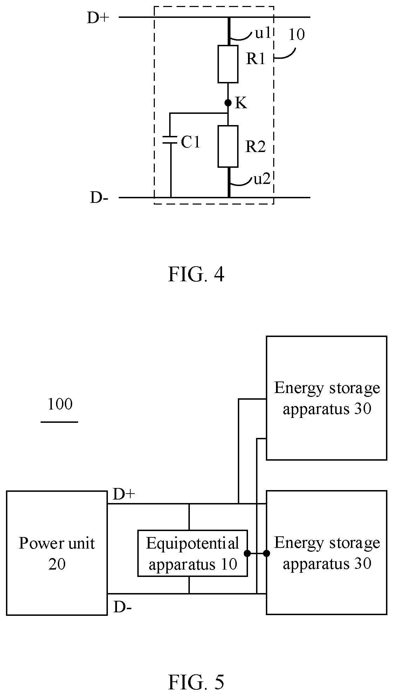

Referring to FIGs. 3 and 4, the equipotential apparatus 10 may include a first connection terminal u1 and a second connection terminal u2, where the first connection terminal u1 is configured to be connected to the positive direct-current bus D+, and the second connection terminal u2 is configured to be connected to the negative direct-current bus D-. The first connection terminal u1 is further connected to a terminal of the plurality of voltage dividing elements, and the second connection terminal u2 is further connected to another terminal of the plurality of voltage dividing elements. For example, referring to FIGs. 3 and 4, the first connection terminal u1 is further connected to the first resistor R1, and the second connection terminal u2 is further connected to the second resistor R2.

The equipotential apparatus 10 may further include a capacitor C1, where the capacitor C1 is connected between the equipotential node K and the first connection terminal u1, that is, the capacitor C1 is connected in parallel to a voltage dividing element located between the positive direct-current bus D+ and the equipotential node K. For example, referring to FIG. 3, the capacitor C1 is connected in parallel to the first resistor R1. Alternatively, the capacitor C1 is connected between the equipotential node K and the second connection terminal u2, that is, the capacitor C1 is connected in parallel to a voltage dividing element located between the negative direct-current bus D- and the equipotential node K. For example, referring to FIG. 4, the capacitor C1 is connected in parallel to the second resistor R2.

When two capacitors C1 are provided, one of the two capacitors C1 is connected between the equipotential node K and the first connection terminal u1, and the other of the two capacitors C1 is connected between the equipotential node K and the second connection terminal u2. That is, one of the two capacitors C1 is connected in parallel to the voltage dividing element located between the positive direct-current bus D+ and the equipotential node K, and the other is connected in parallel to the voltage dividing element located between the negative direct-current bus D- and the equipotential node K.

When two capacitors are provided, capacitance values of the two capacitors may be equal or unequal. It can be understood that the capacitance values of the two capacitors being equal may mean that the two capacitance values are absolutely equal or approximately equal. The two capacitance values being absolutely equal means that a difference between the two capacitance values is 0, and the two capacitance values being approximately equal means that an absolute value of the difference between the two capacitance values is less than a second difference threshold, where the second difference threshold is greater than 0.

Compared with a condition where the two capacitance values are unequal, under the condition that the two capacitance values are equal, the equipotential apparatus 10 has a better equipotential effect.

In this embodiment of this disclosure, the voltage dividing element in the equipotential apparatus 10 may be connected in parallel to the capacitor C1 or may not be connected in parallel to the capacitor C1. Compared with a condition where the voltage dividing element is not connected in parallel to the capacitor C1, under a condition that the voltage dividing element is connected in parallel to the capacitor C1, the equipotential apparatus has a better equipotential effect.

Optionally, the capacitor C1 may be a Y capacitor. Since the capacitor C1 is a Y capacitor, and the capacitor C1 is connected in parallel to the voltage dividing element, if there is a surge in the energy storage system, the capacitor C1 is turned on, the problem of the potential floating of the equipotential node caused by the surge can be effectively prevented.

In addition, compared with the condition where the capacitor C1 is connected in parallel to the voltage dividing element located between the positive direct-current bus D+ and the equipotential node K, under the condition that the capacitor C1 is connected in parallel to the voltage dividing element located between the negative direct-current bus D- and the equipotential node K, the energy storage apparatus fits an equipotential manner of a negative electrode of the power unit, and a small voltage difference is present between the energy storage apparatus and the power unit, so that the risk of insulation is lower.

In this embodiment of this disclosure, the equipotential node K is further configured to be connected to a metal component in the energy storage system. Thus, a voltage between the metal component and the bus can be effectively reduced, and the internal insulation design requirements for the energy storage system can be further effectively reduced. In addition, if the equipotential node K is the midpoint between the plurality of voltage dividing elements, and the resistance value between the equipotential node K and the positive direct-current bus D+ is equal to the resistance value between the equipotential node K and the negative direct-current bus D-, the voltage between the metal component and the bus can be reduced by half, and the internal insulation design requirements for the energy storage system can be further effectively reduced.

In addition, the equipotential node K may be connected to the metal component through a wire, a welding manner, or a bolt locking manner. The metal component may include one or more of the following: an enclosure of an electrical cabinet, an enclosure of an electrical box, an enclosure of a main control box, an enclosure of a battery, an enclosure of a control apparatus, a grounding terminal of the control apparatus, an enclosure of a relay, an enclosure of a power module, an enclosure of an electrical converter, and a water cooling plate. The control apparatus may be configured to control charging and discharging. The power module is configured to convert alternating current. The electrical converter may be a component such as direct current/alternating current (direct current/alternating current, DC/AC) component, an AC/DC component, or a DC/DC component. In addition, the metal component is connected to the equipotential node K, so that the risk of single-point insulation failure can be effectively avoided.

Optionally, the metal component may include an enclosure of an electronic apparatus, that is, the equipotential node K is further configured to be connected to the enclosure of the electronic apparatus in the energy storage system. Optionally, the enclosure of the electronic apparatus may include one or more of the following: the enclosure of the electrical cabinet, the enclosure of the electrical box, the enclosure of the main control box, the enclosure of the battery, the enclosure of the control apparatus, the enclosure of the relay, the enclosure of the power module, and the enclosure of the electrical converter.

In conclusion, this embodiment of this disclosure provides the equipotential apparatus. Under the condition that the equipotential apparatus is disposed between the positive direct-current bus and negative direct-current bus of the energy storage system, the potential of the equipotential node in the equipotential apparatus is between the positive direct-current bus voltage and negative direct-current bus voltage of the energy storage system. Thus, the voltage between the bus in the energy storage system and the metal component connected to the equipotential node can be effectively reduced, so that the reduced voltage is between the positive direct-current bus voltage and the negative direct-current bus voltage, thereby effectively reducing the internal insulation design requirements for the energy storage system.

FIG. 5 is a schematic structural diagram of an energy storage system according to an embodiment of this disclosure. As shown in FIG. 5, the energy storage system 100 may include a power unit 20, an equipotential apparatus 10, and an energy storage apparatus 30.

The power unit 20 is configured to convert alternating current and provide the alternating current to positive and negative direct-current buses, or to transmit electrical energy.

The equipotential apparatus 10 is disposed between the positive and negative direct-current buses and includes an equipotential node.

The energy storage apparatus 30 is connected in parallel between the positive and negative direct-current buses, and a metal component of the energy storage apparatus 30 is connected to the equipotential node.

Optionally, a plurality of energy storage apparatuses 30 may be provided, where the plurality of energy storage apparatuses 30 are connected in parallel between the positive and negative direct-current buses, and the metal component of the energy storage apparatus is connected to the equipotential node K.

In conclusion, this embodiment of this disclosure provides the energy storage system. Under the condition that the equipotential apparatus in the energy storage system is disposed between the positive direct-current bus and negative direct-current bus of the energy storage system, a potential of the equipotential node in the equipotential apparatus is between a positive direct-current bus voltage and negative direct-current bus voltage of the energy storage system. Thus, a voltage between the bus in the energy storage system and the metal component connected to the equipotential node can be effectively reduced, so that the reduced voltage is between the positive direct-current bus voltage and the negative direct-current bus voltage, thereby effectively reducing the internal insulation design requirements for the energy storage system.

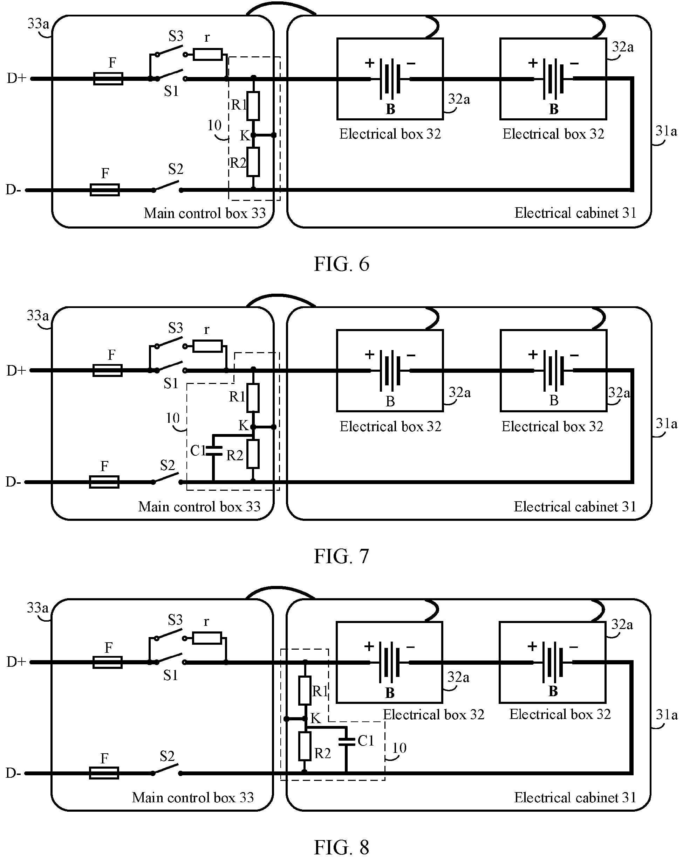

Referring to FIGs. 6, 7, and 8, the energy storage apparatus 30 may include an electrical cabinet 31 and at least one battery B disposed in the electrical cabinet 31. When a plurality of batteries B are disposed in the electrical cabinet 31, the plurality of batteries B are connected in series. As shown in FIGs. 6 to 8, description is made by using an example in which the energy storage apparatus 30 includes two batteries B, and the two batteries B are connected in series. The battery B is connected between the positive and negative direct-current buses. The metal component may include an enclosure 31a of the electrical cabinet 31, that is, the enclosure 31a of the electrical cabinet 31 is connected to the equipotential node K. Thus, the internal insulation design requirements for the energy storage module can be effectively reduced.

Referring to FIGs. 6 to 8, the energy storage apparatus 30 may further include an electrical box 32 corresponding to each battery B, where the electrical box 32 is disposed in the electrical cabinet 31, and an enclosure 32a of the electrical box 32 is connected to the enclosure 31a of the electrical cabinet 31. Since the enclosure 31a of the electrical cabinet 31 is connected to the equipotential node K, and the enclosure 32a of each electrical box 32 is connected to the enclosure 31a of the electrical cabinet 31, the enclosure 32a of each electrical box 32 is also connected to the equipotential node, that is, the metal component may further include the enclosure 32a of each electrical box 32. Thus, a voltage between the battery B and the enclosure 31a of the electrical cabinet 31 can be effectively reduced, and the internal insulation design requirements for the energy storage system can be further effectively reduced. In addition, if the equipotential node K is a midpoint between a first resistor and a second resistor of at least two resistors, and a sum of resistance values between the equipotential node K and the positive direct-current bus D+ is equal to a sum of resistance values between the equipotential node K and the negative direct-current bus D-, the voltage between the battery B and the enclosure 31a of the electrical cabinet 31 can be reduced by half, and the internal insulation design requirements for the energy storage system can be further effectively reduced.

Referring to FIGs. 7 and 8, the energy storage apparatus 30 may further include a main control box 33, where an enclosure 33a of the main control box 33 is connected to the enclosure 31a of the electrical cabinet 31. Since the enclosure 31a of the electrical cabinet 31 is connected to the equipotential node K, and the enclosure 33a of the main control box 33 is connected to the enclosure 31a of the electrical cabinet 31, the enclosure 33a of the main control box 33 is also connected to the equipotential node K, that is, the metal component may further include the enclosure 33a of the main control box 33. Thus, the internal insulation design requirements for the energy storage system can be effectively reduced.

In an optional implementation of this embodiment of this disclosure, referring to FIGs. 6 and 7, the equipotential apparatus 10 may be disposed in the main control box 33, and the main control box 33 may be further internally provided with a main positive switch S1, a main negative switch S2, a precharge switch S3, and a precharge resistor r.

The main positive switch S1 is connected in series to the positive direct-current bus D+, and the precharge switch S3 and the precharge resistor r are connected in series and then connected in parallel to the main positive switch S1. That is, the precharge switch S3 and the precharge resistor r connected in series sequentially are connected in parallel to the main positive switch S1. The main negative switch S2 is further connected in series to the negative direct-current bus D-. A terminal of the equipotential apparatus 10 is connected between the main positive switch S1 and a positive electrode of the battery B, and another terminal of the equipotential apparatus 10 is connected between the main negative switch S2 and a negative electrode of the battery B.

Referring to FIGs. 6 and 7, a first connection terminal u1 of the equipotential apparatus 10 is connected between the main positive switch S1 and the positive electrode of the battery B, and a second connection terminal u2 of the equipotential apparatus 10 is connected between the main negative switch S2 and the negative electrode of the battery B.

The equipotential node K is directly connected to the enclosure 33a of the main control box 33. Since the enclosure 33a of the main control box 33 is connected to the enclosure 31a of the electrical cabinet 31, and the enclosure 31a of the electrical cabinet 31 is connected to the enclosure 32a of each electrical box 32, the equipotential node K is connected to the enclosure 33a of the main control box 33, the enclosure 31a of the electrical cabinet 31, and the enclosure of each electrical box 32.

In this embodiment of this disclosure, the main control box 33 may be disposed in the electrical cabinet 31. Alternatively, as shown in FIGs. 6 and 7, the main control box 33 may be disposed outside the electrical cabinet 31.

Referring to FIGs. 6 and 7, the main control box may further include a fuse F. Two fuses F may be provided, where one fuse F is connected in series to the main positive switch S1, and the other fuse F is connected in series to the main negative switch S2.

In another optional implementation of this embodiment of this disclosure, referring to FIG. 8, the equipotential apparatus 10 may be disposed in the electrical cabinet 31, and a terminal of the equipotential apparatus 10 is connected to the positive electrode of the battery B, and another terminal of the equipotential apparatus 10 is connected to the negative electrode of the battery B.

Optionally, the first connection terminal u1 of the equipotential apparatus 10 is connected to the positive electrode of the battery B, and the second connection terminal u2 is connected to the negative electrode of the battery B.

The equipotential node K is directly connected to the enclosure 31a of the electrical cabinet 31. Since the enclosure 33a of the main control box 33 is connected to the enclosure 31a of the electrical cabinet 31, and the enclosure 31a of the electrical cabinet 31 is connected to the enclosure 32a of each electrical box 32, the equipotential node K is connected to the enclosure 33a of the main control box 33, the enclosure 31a of the electrical cabinet 31, and the enclosure of each electrical box 32.

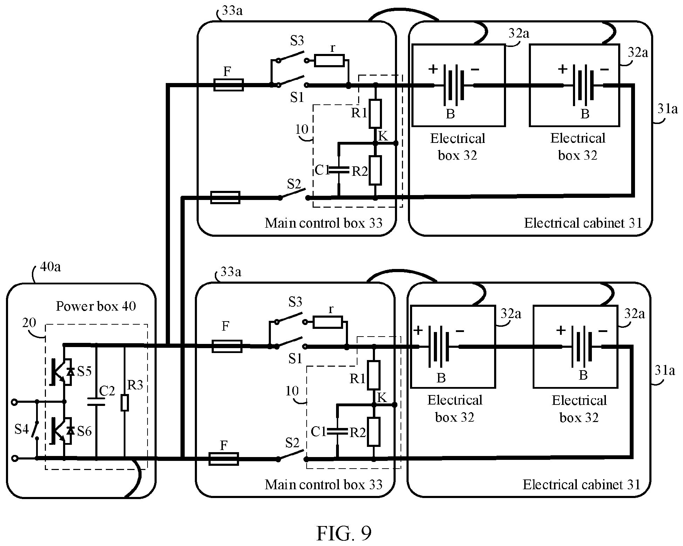

When a plurality of energy storage apparatuses 30 are provided, in an optional implementation of this embodiment of this disclosure, referring to FIG. 9, a plurality of equipotential apparatuses 10 may be provided. The plurality of equipotential apparatuses 10 are in one-to-one correspondence with the plurality of energy storage apparatuses 30. The plurality of energy storage apparatuses 30 are respectively connected in parallel between the positive and negative direct-current buses, and a metal component of each energy storage apparatus 30 (for example, the enclosure 33a of the main control box 33) is connected to an equipotential node K configured by a corresponding equipotential apparatus 10. As shown in FIG. 8, description is made by using an example in which two energy storage apparatuses 30 are connected in parallel between the positive and negative direct-current buses.

In this case, each energy storage apparatus 30 is provided with the equipotential apparatus 10. As shown in FIGs. 6 to 8, if the main control box 33 is disposed in the electrical cabinet 31, the equipotential apparatus 10 may be disposed in the main control box 33 or between the main control box 33 and the electrical box 32. If the main control box 33 is disposed outside the electrical cabinet 31, the equipotential apparatus 10 may be disposed in the main control box 33 or the electrical cabinet 31. This is not limited in this embodiment of this disclosure.

In this implementation, the equipotential apparatus is disposed in each energy storage apparatus, and a metal component in each energy storage apparatus is equipotential with the equipotential node K. In addition, this implementation can adapt to insulation detection functions of the plurality of energy storage apparatuses connected in parallel.

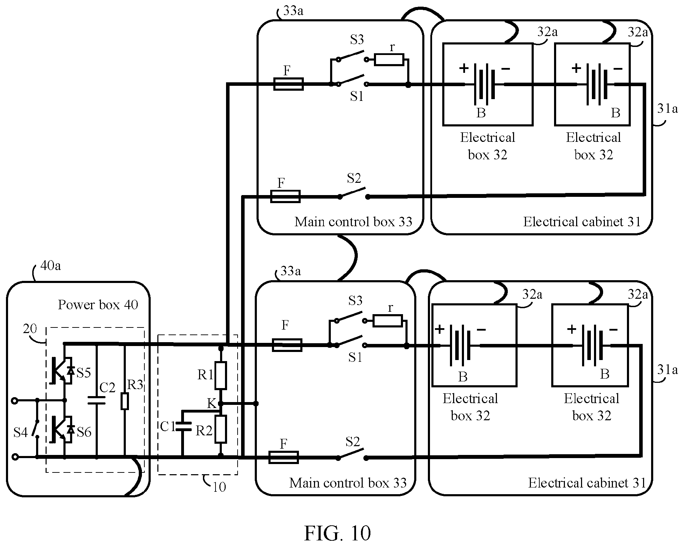

In another optional implementation of this embodiment of this disclosure, referring to FIG. 10, the plurality of energy storage apparatuses 30 are respectively connected in parallel between the positive and negative direct-current buses, and a metal component of any one of the plurality of energy storage apparatuses 30 (for example, the enclosure 33a of the main control box 33) is connected to the equipotential node K, and the metal components of the plurality of energy storage apparatuses 30 (for example, the enclosures 33a of the main control boxes 33) are connected in series.

In this embodiment of this disclosure, the power unit 20 may be disposed in a power box 40, and an enclosure 40a of the power box 40 is connected to the negative direct-current bus D- of the positive and negative direct-current buses.

In this implementation, each energy storage apparatus is equipotential with the equipotential node K. This implementation design is relatively simple. In addition, in an application scenario where a plurality of electrical cabinets are arranged in a concentrated manner in one cabin (such as a container), the potential distribution in the container is relatively uniform, which can avoid the insulation problem.

Referring to FIGs. 9 and 10, an input terminal of the power unit 20 is provided with a bypass switch S4. The bypass switch S4 is configured to be turned off when the energy storage system fails and turned on when the energy storage system operates normally.

Referring to FIGs. 9 and 10, the power unit 20 may be configured by a power component into a half-bridge circuit. The power component may include a first power switch S5, a second power switch S6, an energy storage capacitor C2, and a voltage dividing resistor R3. A terminal of the first power switch S5 is connected to a terminal of the bypass switch S4 and a terminal of the second power switch S6, and another terminal of the first power switch S5 is connected to a terminal of the energy storage capacitor C2, a terminal of the voltage dividing resistor R3, and the positive direct-current bus D+. Another terminal of the second power switch S6 is connected to another terminal of the energy storage capacitor C2, another terminal of the voltage dividing resistor R3, and the negative direct-current bus D-.

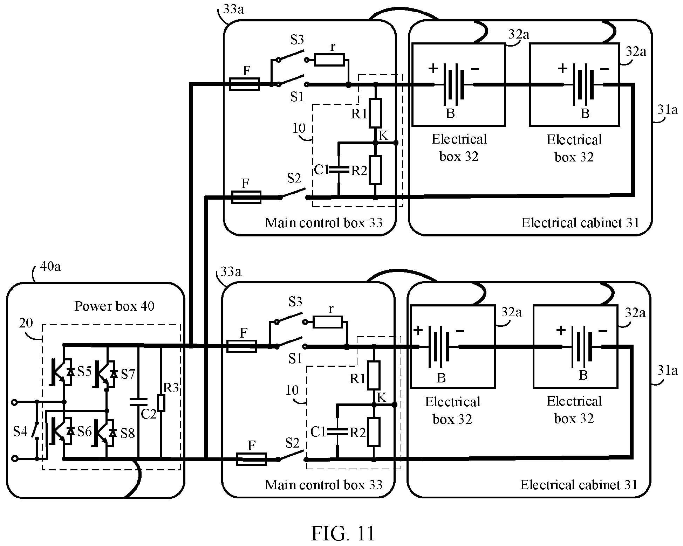

Alternatively, referring to FIG. 11, the power unit 20 may be configured by a power component into a full-bridge circuit. The power component may include a first power switch S5, a second power switch S6, a third power switch S7, a fourth power switch S8, an energy storage capacitor C2, and a voltage dividing resistor R3.

A terminal of the first power switch S5 is connected to a terminal of the bypass switch S4 and a terminal of the second power switch S6, and another terminal of the first power switch S5 is connected to a terminal of the third power switch S7, a terminal of the energy storage capacitor C2, a terminal of the voltage dividing resistor R3, and the positive direct-current bus D+. Another terminal of the second power switch S6 is connected to another terminal of the energy storage capacitor C2, another terminal of the voltage dividing resistor R3, and the negative direct-current bus D-. Another terminal of the fourth power switch S8 is further connected to another terminal of the bypass switch S4.

Alternatively, the power unit 20 may be configured by a power component into a power conversion system (PCS, power conversion system).

In conclusion, this embodiment of this disclosure provides the energy storage system. Under the condition that the equipotential apparatus in the energy storage system is disposed between the positive direct-current bus and negative direct-current bus of the energy storage system, the potential of the equipotential node in the equipotential apparatus is between the positive direct-current bus voltage and negative direct-current bus voltage of the energy storage system. Thus, the voltage between the bus in the energy storage system and the metal component connected to the equipotential node can be effectively reduced, so that the reduced voltage is between the positive direct-current bus voltage and the negative direct-current bus voltage, thereby effectively reducing the internal insulation design requirements for the energy storage system.

An embodiment of this disclosure provides an energy storage device. The energy storage device may include the energy storage system described in the foregoing embodiments, for example, any one of the energy storage systems shown in FIGs. 5 to 11.

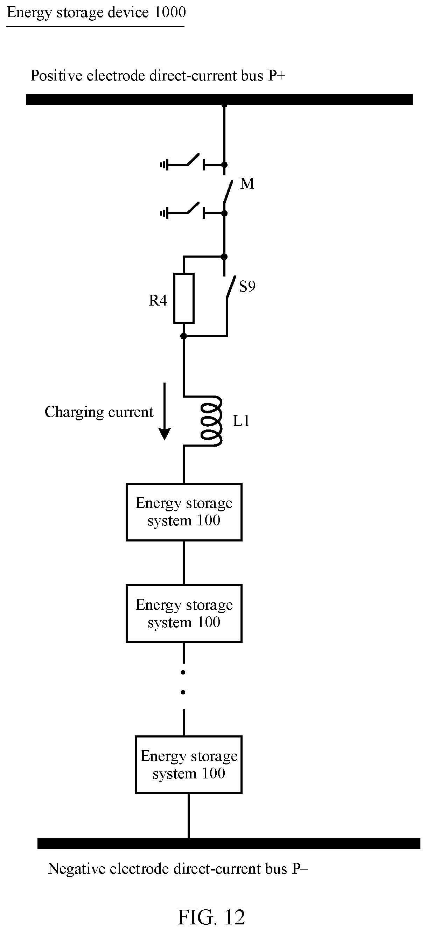

Referring to FIGs. 12 to 14, a plurality of energy storage systems 100 are provided, and the plurality of energy storage systems 100 are cascaded.

Referring to FIG. 12, the energy storage device 1000 may be a direct-current direct-connected energy storage device, and the energy storage device 1000 can be configured to implement functions such as power output and energy storage based on a direct current received from a positive electrode direct-current bus and a negative electrode direct-current bus. Referring to FIG. 12, the energy storage device 1000 may further include an isolation switch M, a start resistor R4, a start switch S9, and a first reactor L1. The start resistor R4 is used to protect the energy storage device 1000 in a start process of the energy storage device. A terminal of the isolation switch M is connected to the positive electrode direct-current bus P+, and another terminal of the isolation switch M is connected to a terminal of the start resistor R4 and a terminal of the start switch S9. Another terminal of the start resistor R4 and another terminal of the start switch S9 are both connected to a terminal of the first reactor L1, and another terminal of the first reactor L1 is connected to a terminal of each of the plurality of cascaded energy storage systems 100, and another terminal of each of the plurality of cascaded energy storage systems 100 is connected to the negative electrode direct-current bus P-. In this implementation, the power unit in the energy storage system is used to transmit direct current.

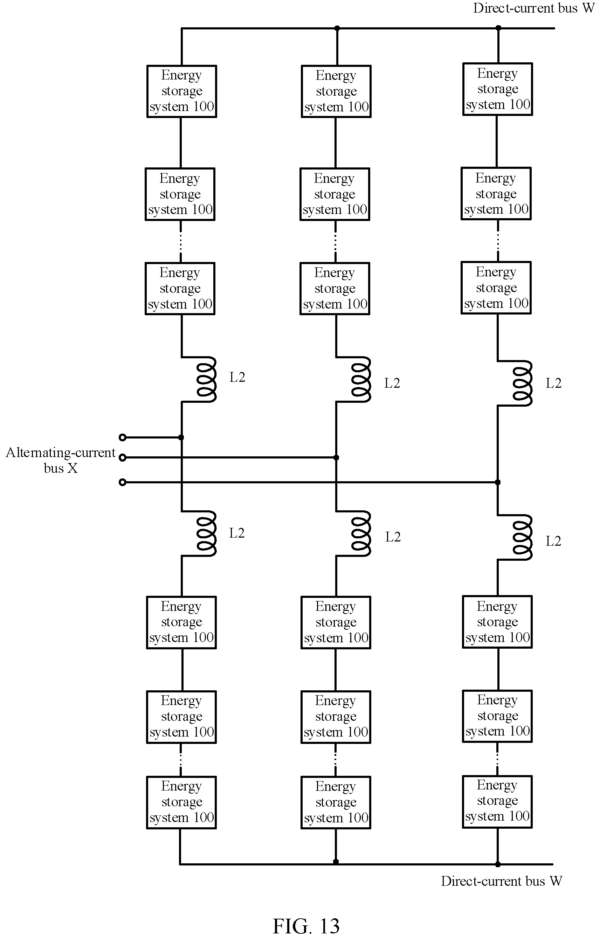

Referring to FIG. 13, the energy storage device 1000 may alternatively be a modular multilevel energy storage device. The energy storage device can implement functions such as alternating current/direct current conversion and control of active or reactive power output. Referring to FIG. 13, the energy storage device 1000 may include six converter legs, and each converter leg may include a plurality of cascaded energy storage systems 100 and a second reactor L2. A terminal of the second reactor L2 in each converter leg is connected to an alternating-current bus X, and another terminal of the second reactor L2 in each converter leg is connected to a terminal of each of the plurality of cascaded energy storage systems 100. Another terminal of each of the plurality of cascaded energy storage systems 100 is connected to a direct-current bus W. The energy storage device 1000 is configured to convert a direct current transmitted by the direct-current bus W into an alternating current and transmit the alternating current to an electric device through the alternating-current bus X.

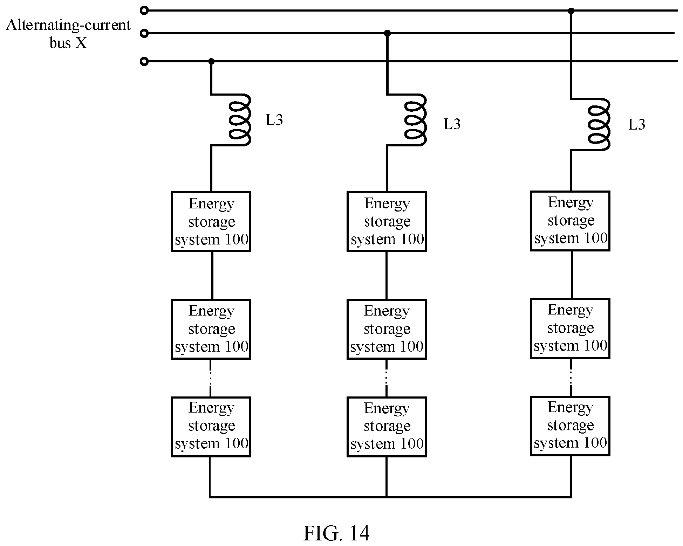

Referring to FIG. 14, the energy storage device 1000 may alternatively be a cascaded energy storage device, and the energy storage device 1000 can be configured to implement functions such as power output and energy storage based on an alternating current received from an alternating-current bus. The energy storage device 1000 may include three converter legs. Each converter leg may include a third reactor L3 and a plurality of cascaded energy storage systems 100. A terminal of the third reactor L3 of each converter leg is connected to the alternating-current bus X, and another terminal of the third reactor L3 of each converter leg is connected to a terminal of each of the plurality of cascaded energy storage systems 100. Other terminals of the plurality of cascaded energy storage systems 100 included in the three converter legs are connected to each other.

An embodiment of this disclosure provides a power station. The power station may include the energy storage device according to the foregoing embodiments, for example, the energy storage device 1000 as shown in FIGs. 12 to 14.

It should be noted that the logic and/or steps represented in the flowchart or otherwise described herein, for example, may be considered to be a definitive list of executable instructions for implementing the logical functions, which may be specifically implemented in any computer-readable medium for use by, or in combination with, an instruction execution system, apparatus, or device (for example, a computer-based system, a system including a processor, or other systems that can obtain instructions from an instruction execution system, apparatus, or device and execute the instructions). For the purposes of this specification, a "computer-readable medium" may be any apparatus that can contain, store, communicate, transfer, or transmit a program for use in or in conjunction with the instruction execution system, apparatus, or device. More specific examples of the computer-readable medium (a non-exhaustive list) include the following: an electrically connected portion with one or more wiring (electronic apparatus), a portable computer disk cartridge (magnetic apparatus), a random access memory (RAM), a read-only memory (ROM), an erasable editable read-only memory (EPROM or flash memory), a fiber optic apparatus, and a portable compact disc read-only memory (CDROM). In addition, the computer-readable medium may even be a paper on which the program may be printed or other suitable medium, because the program may be obtained electronically, for example, through optical scanning of the paper or other medium, followed by editing, decoding, or, if necessary, processing in other suitable ways, and then the program is stored in a computer memory. It should be understood that the parts of this disclosure can be implemented by hardware, software, firmware, or a combination thereof. In the foregoing embodiments, multiple steps or methods may be implemented by software or firmware stored in memory and executed by a suitable instruction execution system. For example, if implemented by hardware, as in another embodiment, they may be implemented by any one of the following techniques known in the art or by a combination thereof: a discrete logic circuit with a logic gate circuit for implementing the logic function on data signals, an application-specific integrated circuit with a suitable combination of logic gate circuits, a programmable gate array (PGA), a field programmable gate array (FPGA), and the like.

In the description of this specification, descriptions referring to the terms "an embodiment", "some embodiments", "exemplary embodiments", "an example", "a specific example", or "some examples" mean the specific features, structures, materials or characteristics described with to this embodiment or example are included in at least one embodiment or example of this disclosure. In this specification, illustrative expressions of these terms do not necessarily refer to the same embodiment or example. Moreover, the specific features, structures, materials, or characteristics described may be combined in any suitable manners in any one or more embodiments or examples. In the description of this disclosure, the orientations or positional relationships indicated by the terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for the ease and brevity of description of this disclosure rather than indicating or implying that the means or components mentioned must have specific orientations or must be constructed or manipulated according to specific orientations, and therefore shall not be construed as any limitations on embodiments of this disclosure.

In addition, the term "first", "second", or the like used in an embodiment of this disclosure is merely for the purpose of description, and shall not be understood as any indication or implication of relative importance or any implicit indication of the number of technical features indicated in this embodiment. Therefore, a feature limited by the term "first", "second", or the like in an embodiment of this disclosure may explicitly or implicitly indicate that at least one feature is included in this embodiment. In the description of this disclosure, the word "a plurality of" means at least two or more than two (inclusive), for example, two, three, or four, unless otherwise explicitly and specifically defined in the embodiments.

In this disclosure, unless otherwise specified or defined explicitly in the embodiments, the terms "mounting", "connection", "join", "fastening", and the like in the embodiments should be understood in their general senses. For example, connection may refer to a fixed connection, a detachable connection, or an integral connection. It can be understood that connection may alternatively refer to a mechanical connection or an electrical connection. Certainly, connection may alternatively refer to a direct connection, an indirect connection through an intermediary, an internal communication between two elements, or an interaction between two elements. Persons of ordinary skill in the art may understand specific meanings of the foregoing terms in this disclosure as appropriate to specific implementation situations. In this disclosure, unless otherwise explicitly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Although the embodiments of this disclosure have been illustrated and described, it can be understood that these embodiments are illustrative and should not be construed as limitations on this disclosure. Persons of ordinary skill in the art can make changes, modifications, substitutions, and variations to the embodiments within the scope of this disclosure.

## Claims

1. An equipotential apparatus applied to an energy storage system, **characterized in that** the equipotential apparatus comprises an equipotential node, wherein under a condition that the equipotential apparatus is disposed between a positive direct-current bus and negative direct-current bus of the energy storage system, a potential of the equipotential node is between a positive direct-current bus voltage and negative direct-current bus voltage of the energy storage system.

2. The equipotential apparatus according to claim 1, **characterized in that** the equipotential apparatus comprises a plurality of voltage dividing elements, wherein the plurality of voltage dividing elements are connected in series, and the equipotential node is disposed between the plurality of voltage dividing elements.

3. The equipotential apparatus according to claim 2, **characterized in that** the voltage dividing elements comprise resistors.

4. The equipotential apparatus according to claim 3, **characterized in that** the plurality of voltage dividing elements comprise two resistors.

5. The equipotential apparatus according to claim 4, **characterized in that** the two resistors have equal resistance values.

6. The equipotential apparatus according to claim 3, **characterized in that** a resistance value between the equipotential node and the positive direct-current bus is equal to a resistance value between the equipotential node and the negative direct-current bus.

7. The equipotential apparatus according to any one of claims 1 to 6, **characterized in that** the equipotential apparatus comprises a first connection terminal and a second connection terminal, wherein the first connection terminal is configured to be connected to the positive direct-current bus, and the second connection terminal is configured to be connected to the negative direct-current bus.

8. The equipotential apparatus according to claim 7, **characterized in that** the equipotential apparatus further comprises a capacitor, wherein
the capacitor is connected between the equipotential node and the first connection terminal; or
the capacitor is connected between the equipotential node and the second connection terminal.

9. The equipotential apparatus according to claim 8, **characterized in that** when two capacitors are provided, one of the two capacitors is connected between the equipotential node and the first connection terminal, and the other of the two capacitors is connected between the equipotential node and the second connection terminal.

10. The equipotential apparatus according to claim 8, **characterized in that** the capacitor is a Y capacitor.

11. The equipotential apparatus according to any one of claims 1 to 10, **characterized in that** the equipotential node is configured to be connected to a metal component in the energy storage system.

12. The equipotential apparatus according to claim 11, **characterized in that** the metal component comprises one or more of the following: an enclosure of an electrical cabinet, an enclosure of an electrical box, an enclosure of a main control box, an enclosure of a battery, an enclosure of a control apparatus, a grounding terminal of the control apparatus, an enclosure of a relay, an enclosure of a power module, an enclosure of an electrical converter, and a water cooling plate.

13. The equipotential apparatus according to claim 11, **characterized in that** the equipotential node is connected to the metal component through a wire, a welding manner, or a bolt locking manner.

14. An energy storage system, **characterized by** comprising:
a power unit, wherein the power unit is configured to convert alternating current and provide the alternating current to positive and negative direct-current buses, or to transmit electrical energy;
the equipotential apparatus according to any one of claims 1 to 13, wherein the equipotential apparatus is disposed between the positive and negative direct-current buses and comprises an equipotential node; and
an energy storage apparatus, wherein the energy storage apparatus is connected in parallel between the positive and negative direct-current buses, and a metal component of the energy storage apparatus is connected to the equipotential node.

15. The energy storage system according to claim 14, **characterized in that** the energy storage apparatus comprises an electrical cabinet and at least one battery disposed in the electrical cabinet, wherein the battery is connected between the positive and negative direct-current buses, and the metal component comprises an enclosure of the electrical cabinet.

16. The energy storage system according to claim 15, **characterized in that** the energy storage apparatus further comprises an electrical box corresponding to each battery, wherein the electrical box is disposed in the electrical cabinet, and an enclosure of the electrical box is connected to the enclosure of the electrical cabinet.

17. The energy storage system according to claim 15, **characterized in that** the energy storage apparatus further comprises a main control box, wherein an enclosure of the main control box is connected to the enclosure of the electrical cabinet.

18. The energy storage system according to claim 17, **characterized in that** the equipotential apparatus is disposed in the main control box.

19. The energy storage system according to claim 18, **characterized in that** the main control box is further internally provided with a main positive switch, a main negative switch, a precharge switch, and a precharge resistor, wherein the main positive switch is connected in series to the positive direct-current bus of the positive and negative direct-current buses, the precharge switch and the precharge resistor are connected in series and then connected in parallel to the main positive switch, and the main negative switch is connected in series to the negative direct-current bus of the positive and negative direct-current buses; and a terminal of the equipotential apparatus is connected between the main positive switch and a positive electrode of the battery, and another terminal of the equipotential apparatus is connected between the main negative switch and a negative electrode of the battery.

20. The energy storage system according to claim 18, **characterized in that** the main control box is disposed outside the electrical cabinet, or the main control box is disposed in the electrical cabinet.

21. The energy storage system according to claim 15, **characterized in that** the equipotential apparatus is disposed in the electrical cabinet, and a terminal of the equipotential apparatus is connected to a positive electrode of the battery, and another terminal of the equipotential apparatus is connected to a negative electrode of the battery.

22. The energy storage system according to any one of claims 15 to 21, **characterized in that** when a plurality of batteries are provided, the plurality of batteries are connected in series.

23. The energy storage system according to any one of claims 14 to 22, **characterized in that** when a plurality of energy storage apparatuses are provided, a plurality of equipotential apparatuses are provided, wherein the plurality of energy storage apparatuses are respectively connected in parallel between the positive and negative direct-current buses, and a metal component of each energy storage apparatus is connected to an equipotential node configured by a corresponding equipotential apparatus.

24. The energy storage system according to any one of claims 14 to 17, **characterized in that** when a plurality of energy storage apparatuses are provided, the plurality of energy storage apparatuses are respectively connected in parallel between the positive and negative direct-current buses, a metal component of any one of the plurality of energy storage apparatuses is connected to the equipotential node, and metal components of the plurality of energy storage apparatuses are connected in series.

25. The energy storage system according to any one of claims 14 to 24, **characterized in that** the power unit is disposed in a power box, and an enclosure of the power box is connected to the negative direct-current bus of the positive and negative direct-current buses.

26. The energy storage system according to any one of claims 14 to 24, **characterized in that** the power unit is configured by a power component into a half-bridge circuit, a full-bridge circuit, or a power conversion system.

27. The energy storage system according to any one of claims 14 to 24, **characterized in that** an input terminal of the power unit is provided with a bypass switch.

28. An energy storage device, **characterized by** comprising the energy storage system according to any one of claims 14 to 27.

29. The energy storage device according to claim 28, **characterized in that** a plurality of energy storage systems are provided, and the plurality of energy storage systems are cascaded.

30. A power station, **characterized by** comprising the energy storage device according to claim 28 or 29.
